# EUROPEAN PATENT SPECIFICATION

(11) **EP 3 682 532 B1**
(45) Date of publication and mention of the grant of the patent: **06.09.2023**
(21) Application number: 18783578.0
(22) Date of filing: 14.09.2018
(51) Int. Cl.: H02K 5/14, H01R 39/38, H01R 39/41

(54) **BRUSH HOLDING ASSEMBLY FOR AN EXCITED-ROTOR ELECTRIC MACHINE**
BÜRSTENHALTEANORDNUNG FÜR EINE ELEKTRISCHE MASCHINE MIT ERREGTEM LÄUFER
ENSEMBLE PORTE-BALAIS POUR MACHINE ÉLECTRIQUE À ROTOR EXCITÉ

(30) Priority: 15.09.2017 IT 201700103738
(43) Date of publication of application: 22.07.2020
(73) Proprietor: Eldor Corporation S.p.A., 22030 Orsenigo (Como) (IT)
(72) Inventor: FORTE, Pasquale, 22030 Orsenigo (Como) (IT); ALBERTINI, Giandomenico, 22030 Orsenigo (Como) (IT); MARIGLIANO, Fabio, 22030 Orsenigo (Como) (IT)
(74) Representative: Zermani Biondi Orsi, Umberto
(86) International application number: PCT/IB2018/057038
(87) International publication number: WO 2019/053640

(56) References cited:
- DE-U1-202005 015 604
- US-A- 3 864 803
- US-A- 4 959 576
- US-A1- 2004 080 231
- US-A1- 2010 141 082
- US-A1- 2013 140 940
- US-A1- 2014 035 399

## Description

The present invention object is a brush holding assembly device for an excited-rotor electric machine.

The present invention therefore has particular application in the making of excited-rotor electric machines, preferably for the use of automotive traction.

These types of electric machines, in fact, have a rotor and a stator both fed by a current generator. In order to allow the connection between the generator and the rotor, it is usually provided the use of a collector engagement.

Generally, in fact, a sleeve (called *slip ring*) is fitted on the rotor rotation shaft on which two circumferential conductive tracks are fixed parallel to each other and connected in turn by copper wires to the rotor windings. On the machine casing there is a housing for a brush holding assembly, inside which there are at least two brushes (or abutment elements) which are placed in sliding contact with the tracks in order to transmit the current. Disadvantageously, the presence of a sliding contact determines that, over time, the brushes may wear out, reducing the contact pressure on the tracks and, therefore, creating reliability problems for the machine.

Some prior art brush holding assembly are known from documents US2004/080231, US3864803 and US2013/140940.

The aim of the present invention is to make available a brush rigging for an excited-rotor electric machine capable of overcoming the drawbacks of the aforementioned prior art.

More precisely, the aim of the present invention is to make available a brush rigging for a reliable and easy-to-make excited-rotor electric machine.

Said aim is achieved by a brush holding assembly for an excited-rotor electric machine according to the invention as defined in the independent claim 1 and a method of mounting such a brush holder assembly as defined in the independent claim 5. Further embodiments of the invention are defined in the dependent claims 2-4.

Advantageously, in this way it is possible to compensate the brush wear while maintaining the connection efficiency and without reducing reliability.

These and other features, with the relative advantages, will become more apparent from the subsequent exemplary, therefore not limiting, description of a preferred, therefore not exclusive, embodiment of a brush holding assembly for an excited-rotor electric machine according to what illustrated in the appended figures, wherein:

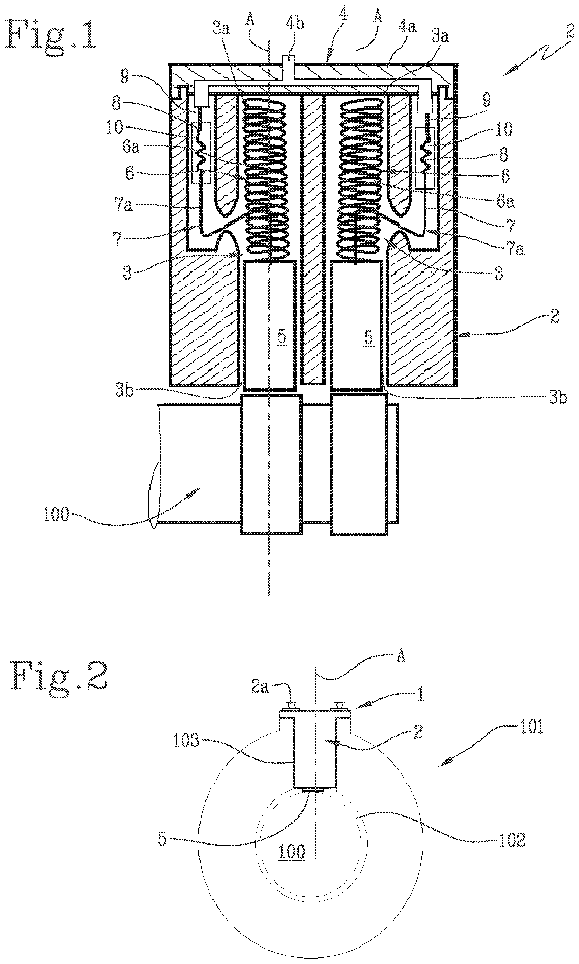

- figure 1 schematically shows a brush holding assembly according to an embodiment not part of the present invention;
- figure 2 schematically shows a contact chamber 101 for an excited-rotor electric machine comprising the brush holding assembly of figure 1;
- figure 3 show a perspective view of a further embodiment of a brush holding assembly according to the present invention;
- figure 4 shows a longitudinal sectional view of the brush holding assembly of figure 3.

With reference to the appended figures, with number 1 reference is made to a brush holding assembly for an excited-rotor electric machine according to the present invention.

Said brush holding assembly 1 comprises a casing 2 provided with at least two ducts 3 mutually flanked to each other and developing along a preferential direction "A" between a first end 3a and a second end 3b.

The second end 3b is open and accessible along the preferential direction "A".

More preferably, also the first end 3a is open and connected to an electrical connecting member 4.

Said connecting member 4 is therefore associated with the casing 2 at the first end 3a of the ducts 3 and is arranged to connect with an electric current generation unit (not illustrated).

In this light, the connecting member 4 preferably comprises at least one conductive element 4b (preferably two) configured to transmit the electric current energy generated by the generating unit.

The conductive element 4b may be, for example, be defined by a plate anchored to an insulating support 4a.

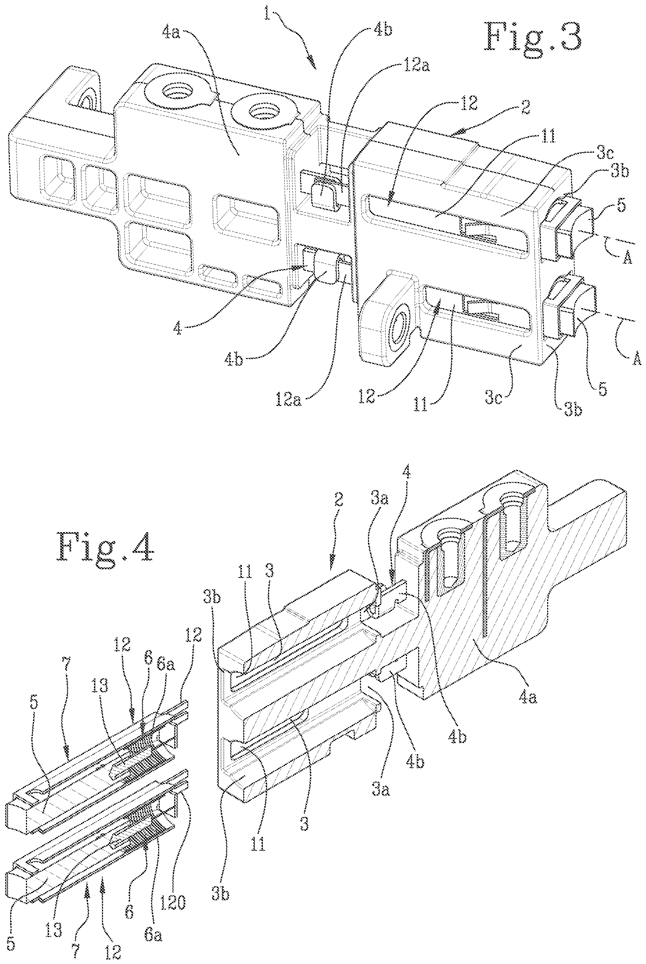

Alternatively (figures 3 and 4), the conductive element is defined by a pair of plate connectors.

In the preferred embodiment, in fact, the electrical connecting member 4 comprises an insulating support 4a shaped like a plug (or the like) and selectively coupled, preferably with fast connection means, to the first end 3a of the duct to occlude it.

Inside each duct 3, a brush 5 is provided suitable for transmitting the current coming from the connecting member 4, by sliding contact, to a rotor collector 100.

It should be noted that the term "brush" refers to both filament brushes and, preferably, bar-shaped brushes having a rectangular cross-section and made of materials such as, for example, high density carbon or graphite impregnated with high electrical conductivity metal.

Each brush 5 is housed capable of sliding (along the preferential direction "A") in the respective duct 3 of the casing 2 and is positioned so as to be (even imperceptibly when in contact with the collector) externally projecting from the second end 3b in order to sliding contact the collector 100.

Preferably, the casing 2 has at least one through opening 11 made at a side wall 3c of each duct 3 in order to increase the heat exchange.

More preferably, said through openings 11 have longitudinal development along said preferential direction and run along the brushes 5.

In the illustrated embodiment, the casing has two through openings 11 for each duct 3.

According to an aspect of the present invention, the brush holding assembly 1 comprises presser members 6 associated with the brushes 5 and configured to push said brushes 5 towards the second end 3a in order to keep them pressed on the respective tracks of the rotating collector. The presser members 6 are therefore housed in the duct 3. operatively interposed between the first end 3a and the brush 5.

Preferably, the support also comprises guide means suitable for keeping the movement of the brushes inside the duct 3 linear, facilitating the action of the presser members 6.

In the preferred embodiment, the presser members 6 comprise a spring 6a, preferably helical, developing between the first end 3a of the duct and the brush 5, more preferably preloaded.

Still according to the present invention, moreover, the brush holding assembly 1 comprises at least two conductive elements 7 developing along the preferential direction "A" of a respective duct 3 and each one interposed between a respective brush 5 and said connecting member 4. Such conductive elements 7 are configured to deform along said preferential direction "A" in order to follow the movement of the brush 5 imparted by the presser members 6 (as a result of wear). Advantageously, in this way there is no risk that the brushes 5, translating inside the duct 3, damage the connections or interrupt the connection with the connecting member 4.

In an example, not part of the claimed invention, each of the conductive element 7 are defined by a loose wire or rope 7a developing between the respective brush 5 and the connecting member 4.

In an alternative example, not part of the claimed invention, the conductive element 7 comprises a elastically deformable section 8 (for example spring-shaped) along said preferential direction "A".

In some embodiments, the conductive elements 7 can be housed in the ducts 3.

In an example, not part of the claimed invention, however, the casing 2 comprises a pair of auxiliary chambers 9, flanked to each other and in connection with a respective duct 3.

The conductive elements 7 are at least partially housed inside said auxiliary chambers 9 in order to avoid interference with the presser members 6.

More precisely, the conductive elements 7 develop from the respective brush (in the duct 3), continue to escape from the duct and enter the auxiliary chamber 9 and then connect to the connecting member 4.

In this regard, the shape of the transition zone between the duct 3 and the auxiliary chamber 9 is suitably shaped and free from sharp edges in order to allow the conductive element 7 (copper wire or rope or the like) to slide without damaging it.

Moreover, in some embodiments, in order to optimize the connection reducing the losses, the conductive element 7 is fixed to the connecting member 4 by means of a pressure engagement 10, more preferably reversible.

In an example, not part of the claimed invention, the casing 2, the two brushes 5, the connecting member 4, the presser members 6 and the conductive elements 7 are comoulded.

In this regard, a compensation chamber 10, preferably housed in the auxiliary chamber 9, is preferably provided, containing the deformable section of the wire or rope 7a.

According to the present invention, the two conductive elements 7 are defined by two pre-assembled conductive cartridges 12.

Each cartridge 12 develops longitudinally along the preferential direction "A" and comprises a containment volume inside.

More precisely, the cartridge 12 is counter-shaped and engaged into the respective duct 3.

In particular, each cartridge 12 has an end 12a constrained to the connecting member 4 and contains (inside said volume) the respective brush 5, the respective presser member 6 and at least one flexible element 13 developing between a wall of said cartridge 12 and the brush 5.

In the preferred embodiment, the end 12a of the cartridge has a pin (or protrusion) which can be coupled with a terminal of the connecting member 4.

More preferably, the end 12a of the cartridge 12 is constrained to the connecting member 4 via a welding.

This allows to facilitate the mounting method of the brush holding assembly 1.

In fact, thanks to the arrangement of the cartridges 12 containing the brush 5 and the respective presser member 6 it is possible to mount the assembly 1 simply by:
- arranging the casing 2;
- arranging the cartridges 12;
- engaging each cartridge 12 inside the respective duct 3 so that one end 12a of the cartridge 12 is abutted to said at least one connecting member 4;
- coupling said end 12a with said connecting member 4 by means of welding.

Moreover, the casing 2 is provided with fixing means 2a facing outwardly thereof and shaped to allow a reversible coupling of the casing 2 itself with a housing of the collector 100.

In this regard, preferably the brush holding assembly 1 according to the invention is used inside a contact chamber 101 for a such shaped excited-rotor electric machine.

Said chamber 101 comprises an annular housing 102 for a sliding-ring collector 100 and a sliding-ring collector 100 as previously described. Preferably, the annular housing 102 comprises a receiving space 103 for the brush holding assembly 1.

Thanks to the fixing means 2a (for example by interlocking or screwing), the brush holding unit 1 (in particular the casing 2) can be reversibly coupled with the receiving space 101.

Therefore, such brush holding assembly 1 can be selectively switched, by its fixing means 2a, between a release configuration and a coupling configuration, wherein the brushes 5 result to be faced internally in the annular housing 102 and abutted to the collector 100.

The invention achieves the intended aims and achieves important advantages.

In fact, the arrangement of a brush holding assembly provided with a deformable conductive element, together with the presence of presser members capable of maintaining contact with the collector, maximizes the efficiency and reliability of the connection.

## Claims

1. Brush holding assembly for an excited-rotor electric machine, comprising:
- a casing (2) provided with at least two ducts (3) mutually flanked to each other and developing along a preferential direction (A) between a first end (3a) and a second end (3b); said second end (3b) being open and accessible;
- at least two brushes (5) housed and capable of sliding each in a respective duct (3) and projecting externally to said second end (3b);
- a connecting member (4) arranged to connect with an electric current generation unit associated with said casing (2) at said first end (3a) of the ducts (3);
- presser members (6) associated with the brushes (5) and configured to push said brushes (5) in the direction of the second end (3b) in order to keep them pressed on the respective tracks of a rotating collector (100) of a rotor;
- at least two conductive elements (7) developing along said preferential direction (A), each operatively interposed between a respective brush (5) and said connecting member (4) and configured to deform along said preferential direction (A) in order to follow the movement of the brush (5) imparted by the presser members (6),
**characterized in that** said casing (2) comprises fixing means (2a) externally faced to it and shaped to allow a reversible coupling of the casing (2) with the housing of the collector (100),
wherein said two conductive elements (7) each have a conductive cartridge (12):
- having an end constrained to said connecting member (4),
- containing the respective brush (5) and the respective presser member (6) and
- comprising at least one flexible element (13) developing between a wall of said cartridge (12) and the brush (5).

2. Brush holding assembly according to any one of the preceding claims, **characterized in that** said cartridges (12) are fixed to the connecting member (4) by means of a pressure engagement (10).

3. Brush holding assembly according to any of the previous claims, **characterized in that** said casing (2) has at least one through opening (11) made at a side wall (3c) of each duct (3) in order to increase the heat exchange.

4. Contact chamber (101) for an excited-rotor electric machine, comprising:
- an annular housing (102) for a sliding-ring collector;
- a sliding-ring collector (100) inserted with the possibility of rotation within said housing (102);
**characterized in that** said annular housing (102) comprises a brush holding assembly (1) according to claim 3 in a receiving space (103), wherein said brush holding assembly (1) is reversibly coupled to said receiving space (103) and can be selectively switched, through its fixing means (2a), between a release configuration and a coupling configuration, wherein the brushes (5) are faced internally to the annular housing (102) and abutted against the collector (100).

5. Method for mounting a brush holding assembly according to claim 1, comprising the steps of:
- arranging a casing (2) provided with at least two ducts (3) mutually flanked to each other and developing along a preferential direction (A) between a first end (3a) and a second end (3b); - said casing (2) further comprising at least one connecting member (4) arranged to connect with an electric current generation unit and at least partially placed at said first end (3a) of the ducts (3);
- arranging a pair of conductive cartridges (12) each containing a respective brush (5) and a respective presser member (6) and comprising at least one flexible element (13) developing between a wall of said cartridge (12) and the brush (5);
- engaging each cartridge (12) inside the respective duct (3) so that one end (12a) of the cartridge (12) is abutted to said at least one connecting member (4);
- coupling said end (12a) with said connecting member (4) by means of welding.

## Patentansprüche

1. Bürstenhalteranordnung für eine elektrische Maschine mit erregtem Läufer, umfassend:
- ein Gehäuse (2), das mit mindestens zwei Leitungen (3) versehen ist, die einander flankieren und sich entlang einer Vorzugsrichtung (A) zwischen einem ersten Ende (3a) und einem zweiten Ende (3b) erstrecken, wobei das erste Ende (3b) offen und zugänglich ist;
- mindestens zwei Bürsten (5) die in einer jeweiligen Leitung (3) untergebracht und in der Lage sind, darin verschoben zu werden, und die außenseitig zum zweiten Ende (3b) hervorstehen;
- ein Verbindungselement (4), das angeordnet ist, um mit einer Stromerzeugungseinheit verbunden zu werden, die mit dem Gehäuse (2) am ersten Ende (3a) der Leitungen (3) assoziiert ist;
- Presselemente (6), die mit den Bürsten (5) assoziiert und ausgelegt sind, um die Bürsten (5) in die Richtung des zweiten Endes (3b) zu drücken, um sie gegen die jeweiligen Bahnen eines rotierenden Kollektors (100) eines Läufers gepresst zu halten;
- mindestens zwei leitende Elemente (7), die sich entlang der Vorzugsrichtung (A) entwickeln und jeweils eingesetzt zwischen einer jeweiligen Bürste (5) und dem Verbindungselement (4) betriebswirksam und ausgelegt sind, um sich entlang der Vorzugsrichtung (A) zu verformen, sodass sie der Bewegung der Bürste (5) folgen, die von den Presselementen (6) verliehen wird,
**dadurch gekennzeichnet, dass** das Gehäuse (2) Fixiermittel (2a) umfasst, die ihm außenseitig zugewandt und die ausgeformt sind, um eine reversierbare Kupplung des Gehäuses (2) mit der Aufnahme des Kollektors (100) zu erlauben,
wobei die beiden leitenden Elemente (7) jeweils eine leitende Kartusche (12) aufweisen,
- aufweisend ein Ende, das am Verbindungselement (4) befestigt ist;
- enthaltend die jeweilige Bürste (5) und das jeweilige Presselement (6) und
- umfassend mindestens ein flexibles Element (13), das sich zwischen einer Wand der Kartusche (12) und der Bürste (5) entwickelt.

2. Bürstenhalteranordnung nach einem der vorhergehenden Ansprüche, **dadurch gekennzeichnet, dass** die Kartuschen (12) am Verbindungselement (4) mittels einer Druckeingriffsverbindung (10) fixiert sind.

3. Bürstenhalteranordnung nach einem der vorhergehenden Ansprüche, **dadurch gekennzeichnet, dass** das Gehäuse (2) mindestens eine Durchführungsöffnung (11) aufweist, die an einer Seitenwand (3c) einer jeden Leitung (3) ausgebildet ist, um den Wärmetausch zu erhöhen.

4. Kontaktkammer (101) für eine elektrische Maschine mit erregtem Läufer, umfassend:
- eine ringförmige Aufnahme (102) für einen Gleitringkollektor;
- einen Gleitringkollektor (100), der mit der Möglichkeit zur Drehung in der Aufnahme (102) eingesetzt ist,
**dadurch gekennzeichnet, dass** die ringförmige Aufnahme (102) eine Bürstenhalteranordnung (1) nach Anspruch 3 in einem Aufnahmeraum (103) umfasst, wobei die Bürstenhalteranordnung (1) reversibel mit dem Aufnahmeraum (103) gekuppelt ist und durch ihre Fixiermittel (2a) selektiv zwischen einer Freigabeauslegung und einer Kupplungsauslegung umgeschaltet werden kann, wobei die Bürsten (5) innenseitig der ringförmigen Aufnahme (102) zugewandt sind und gegen den Kollektor (100) anschlagen.

5. Verfahren zum Montieren einer Bürstenhalteranordnung nach Anspruch 1, umfassend die folgenden Schritte:
- Anordnen eines Gehäuses (2), das mit mindestens zwei Leitungen (3) versehen ist, die einander flankieren und sich entlang einer Vorzugsrichtung (A) zwischen einem ersten Ende (3a) und einem zweiten Ende (3b) erstrecken,
- wobei das Gehäuse (2) zudem mindestens ein Verbindungselement (4) umfasst, das angeordnet ist, um mit einer Stromerzeugungseinheit verbunden zu werden, und das mindestens teilweise am ersten Ende (3a) der Leitungen (3) platziert ist;
- Anordnen eines Paars leitender Kartuschen (12), die jeweils eine Bürste (5) und ein jeweiliges Presselement (6) umfassen und die mindestens ein flexibles Element (13) umfassen, das sich zwischen einer Wand der Kartusche (12) und der Bürste (5) entwickelt;
- Eingreifen einer jeden Kartusche (12) in die jeweilige Leitung (3), sodass ein Ende (12a) der Kartusche (12) am mindestens einen Verbindungselement (4) anschlägt;
- Kuppeln des Endes (12a) mit dem Verbindungselement (4) durch Verschweißen.

## Revendications

1. Ensemble porte-balais pour machine électrique à rotor excité, comprenant :
- une enveloppe (2) munie d'au moins deux conduits (3) mutuellement flanqués l'un de l'autre et se développant selon une direction préférentielle (A) entre une première extrémité (3a) et une deuxième extrémité (3b) ; ladite deuxième extrémité (3b) étant ouverte et accessible ;
- au moins deux balais (5) logés et capables de coulisser chacun dans un conduit respectif (3) et faisant saillie à l'extérieur de ladite seconde extrémité (3b) ;
- un élément de liaison (4) agencé pour se connecter à une unité de génération de courant électrique associée à ladite enveloppe (2) à ladite première extrémité (3a) des conduits (3) ;
- des éléments presseurs (6) associés aux balais (5) et configurés pour pousser lesdits balais (5) en direction de la seconde extrémité (3b) afin de les maintenir pressés sur les pistes respectives d'un collecteur rotatif (100) d'un rotor ;
- au moins deux éléments conducteurs (7) se développant le long de ladite direction préférentielle (A), chacun interposé fonctionnellement entre un balai respectif (5) et ledit élément de liaison (4) et configuré pour se déformer le long de ladite direction préférentielle (A) afin de suivre le mouvement du balai (5) communiqué par les éléments presseurs (6),
**caractérisé en ce que** ladite enveloppe (2) comprend des moyens de fixation (2a) tournés vers l'extérieur et conformés pour permettre un couplage réversible de l'enveloppe (2) avec le boîtier du collecteur (100),
dans lequel lesdits deux éléments conducteurs (7) ont chacun une cartouche conductrice (12) :
- ayant une extrémité contrainte audit élément de liaison (4),
- contenant le balai respectif (5) et l'élément presseur respectif (6) et
- comprenant au moins un élément flexible (13) se développant entre une paroi de ladite cartouche (12) et le balai (5).

2. Ensemble porte-balais selon l'une quelconque des revendications précédentes, **caractérisé en ce que** lesdites cartouches (12) sont fixées à l'élément de liaison (4) au moyen d'un engagement par pression (10).

3. Ensemble porte-balais selon l'une quelconque des revendications précédentes, **caractérisé en ce que** ladite enveloppe (2) comporte au moins une ouverture traversante (11) réalisée au niveau d'une paroi latérale (3c) de chaque conduit (3) afin d'augmenter l'échange de chaleur.

4. Chambre de contact (101) pour machine électrique à rotor excité, comprenant :
- un boîtier annulaire (102) pour un collecteur à anneau coulissant ;
- un collecteur à anneau coulissant (100) inséré avec possibilité de rotation à l'intérieur dudit boîtier (102) ;
**caractérisée en ce que** ledit boîtier annulaire (102) comprend un ensemble porte-balais (1) selon la revendication 3 dans un espace de réception (103), dans lequel ledit ensemble porte-balais (1) est couplé de manière réversible audit espace de réception (103) et peut être commuté sélectivement, par l'intermédiaire de ses moyens de fixation (2a), entre une configuration de libération et une configuration de couplage, dans lequel les balais (5) sont tournés vers l'intérieur du boîtier annulaire (102) et en butée contre le collecteur (100).

5. Procédé pour monter un ensemble porte-balais selon la revendication 1, comprenant les étapes suivantes :
- agencer une enveloppe (2) munie d'au moins deux conduits (3) mutuellement flanqués l'un de l'autre et se développant selon une direction préférentielle (A) entre une première extrémité (3a) et une deuxième extrémité (3b) ; - ladite enveloppe (2) comprenant en outre au moins un élément de liaison (4) agencé pour se connecter à une unité de génération de courant électrique et au moins partiellement placé à ladite première extrémité (3a) des conduits (3) ;
- agencer une paire de cartouches conductrices (12) contenant chacune un balai respectif (5) et un élément presseur respectif (6) et comprenant au moins un élément flexible (13) se développant entre une paroi de ladite cartouche (12) et le balai (5) ;
- engager chaque cartouche (12) à l'intérieur du conduit respectif (3) de sorte qu'une extrémité (12a) de la cartouche (12) soit en butée contre ledit au moins un élément de liaison (4) ;
- coupler ladite extrémité (12a) avec ledit élément de liaison (4) au moyen d'un soudage.
